# EUROPEAN PATENT APPLICATION

(11) **EP 1 103 535 A2**
(43) Date of publication of application: **30.05.2001**
(21) Application number: 00125682.5
(22) Date of filing: 23.11.2000
(51) Int. Cl.: C05D 9/02, C05B 13/00, C05B 13/04

(54) **Fertilizer containing polyphosphate-metal chelates**

(30) Priority: 24.11.1999 JP 33220499
(71) Applicant: Takeda, Iwao, Kamiina-gun, Nagano 399-4601 (JP); Tamiya, Hiroshi, Kawagoe-shi, Saitama 350-1101 (JP); Harada, Kaori, Kamiina-gun, Nagano 399-0424 (JP)
(72) Inventor: Takeda, Iwao, Kamiina-gun, Nagano 399-4601 (JP); Tamiya, Hiroshi, Kawagoe-shi, Saitama 350-1101 (JP); Harada, Kaori, Kamiina-gun, Nagano 399-0424 (JP)
(74) Representative: Bauer, Friedrich, Dipl.-Ing.

(57) **Abstract**

A fertilizer is provided which comprises 0.01 to 5 parts of a metallic compound, 2-8 parts of one or combination of potassic and nitrogenous elements, 1 to 5 parts of alkali polyphosphate, 30 to 70 parts of corn embryo or oil cake of rice bran wherein the metallic compound and alkali polyphosphate can form a chemically stabler chelate which can generate enzymes having a detoxifying effect on carcinogenic substances and the like, anticancer effect, and a resistance to oxidation in living bodies.

## Description

### Technical Field

The present invention relates to manure, and particularly, a fertilizer with a polyphosphate and a metal for forming a chelate, and crops cultivated with the fertilizer.

### Background Art

Fertilizers are applied to soil to supply nutrition to agricultural products and to thereby increase the yield and to prevent degradation of the fertility of the soil. It is known to supply to soil large amounts of three major manurial components of nitrogen (N), phosphorus (P) and potassium (K) indispensable for growth of plants. Nitrogen serves to promote synthesis of protein in a plant, division and multiplication of cells, growth of the roots and sufficient upgrowth of the leaves and stems and to advance absorption and the anabolism of the nutrition. Phosphorus is effective to accelerate growth of the roots to increase the nutrition absorbing area of them and to activate the germination. Also, phosphorus serves to promote maturation of plants and increases the yield of seeds and fruits, to enhance generation of starch and activity of the enzymes and microorganisms, to exterminate noxious insects or vermin and to improve quality of the harvest. Potassium is efficacious to synthesize carbohydrates and nitrogen compounds to promote anabolism, growth of the roots, flowering and fruitage to adjust evaporation of water from plants and to increase the resistance to damages by cold weather and harmful insects. In addition to three major nutrients, the fertilizer may contain calcium (Ca), magnesium (Mg), silicon (Si), manganese (Mn), zinc (Zn), copper (Cu), molybdenum (Mo), iron (Fe), and boron (B) to directly or indirectly assist the good growth of plants.

For example, Japanese Patent Disclosure No. 5-201784 shows a phosphate fertilizer including sludge of low carbon ferrochrome ore. Also, Japanese Patent Disclosure No. 10-17390 shows a fertilizer including charcoals of ligneous split which keep a water-soluble phosphate in their surface layers or pores to improve soil with effect of phosphate fertilizer. Furthermore, Japanese Patent Disclosure No. 10-87389 shows a fertilizer formed by a typical granulator into particulate shape with the components less than 50 weight % relative to nitrogen element of phosphate element, inorganic powder and humate.

A prior art phosphate fertilizer is usually supplied in a solid phosphate including metals such as chromium, iron, magnesium and potassium to maintain the more durable fertile effect by phosphate compared with liquid fertilizers. However, in most cases, the phosphate fertilizer may tend to be denatured or deposited as useless compounds by reaction of the metals and phosphate in soil during a long period of time. The denatured phosphate fertilizer or deposited useless compounds prevent absorption of fertile components by crops or agricultural products thereby losing the essential phosphate effect for promoting growth of roots, seeds and fruits of agricultural products. Also, in recent years, consumers require upgraded agricultural products, high quality of crops with good appearance in color and luster, excellent aroma and delicious taste.

An object of the present invention is to provide a chemically stable fertilizer capable of forming a chelate for encouraging absorption of effective components by crops. Another object of the present invention is to provide a fertilizer which contains a chelate effective to cultivate agricultural products with their good color, excellent aroma and delicious taste as well as antiseptic and fungicidal properties. A still further object of the present invention is to provide a fertilizer with a chelate capable of generating in a living body active enzymes with a detoxifying effect on hydrogen peroxide, organic peroxides, carcinogenic substances and a resistance to oxidation when the living body ingests the agricultural product cultivated with the fertilizer according to the present invention.

### DISCLOSURE OF INVENTION

The fertilizer according to the present invention comprises on the basis of weight 0.01 to 5 parts of a metallic compound, 2 to 8 parts of one or combination of potassic and nitrogenous elements, 1 to 5 parts of alkali polyphosphate, and 30 to 70 parts of corn embryo or oil cake of rice bran wherein the metallic compound and alkali polyphosphate can form a chelate.

Polyphosphoric acid alkali and metallic compound in the fertilizer, generates chelate rings of the metal coordination after the mixture of the fertilizer ingredients or in soil. Oxygen atoms of polyphosphoric acid coordinates with the metals to form bidentate and terdentate ligands each which includes coordinated two and three oxygen atoms in the polyphosphate to form chelate rings with the metals. The coordinated compounds with the chelate rings are not denatured for a long period of time and hardly generate deposition of useless metallic compounds because the coordinated compounds are stabler than simple coordinated compounds without chelate rings. Accordingly, when the fertilizer with the chelate is applied in soil, crops or agricultural products for example vegetables or mushrooms can absorb the resultant chelate in the fertilizer because the chelate is hardly decomposed or deteriorated by microorganisms or metals in soil.

When peoples and animals ingest the crops or agricultural products cultivated with the fertilizer, the ingested chelate provides an active center incorporated in the peptide chain to be subjected to oxidation-reduction in substrate, and derives enzymes for example glutathione S-transferase (GST) molecular species and glutathione peroxidase (GPx) for detoxification and antioxidation. Electrophile compounds contained in a living body attack the high electronic density of other molecules by electrophilic reaction such as electrophilic substitution and electrophilic addition for covalent bond with an electron of the attacked molecule. For example, the electrophile compound has the electrophile group which may attack the high electronic density area of metal-nitrogen bond of a polymer including metal such as Si-N bond, Al-N bond and B-N bond, to separate the metal-nitrogen bond and form new bonds. The electrophile compound is generated by hydration of carcinogens which contain at least one of polynuclear aromatic hydrocarbons such as benzo pyrene, azo-compound, aromatic amine and other chemical substances to cause mutation, cell toxicity and carcinogenesis by forming a covalent bond with a nucleophillic potion of DNA or protein. The enzymes for detoxification serve as a catalyst for reduction reaction into water or alcohol of highly reactive electrophillic compounds with active oxygen, hydrogen peroxide or organic peroxides.

Also, the fertilizer can raise crops or agricultural products of high nutrition value because of existence of corn embryo or oil cake of rice bran in the fertilizer. The embryo is some kind of seeds and fruits rich in protein, fats and minerals which contain large amounts of vitamins B1 and E, and in particular, corn embryo contains a large quantity of fats. Rice bran contains large amounts of carbohydrate, protein and fats because it is a mixture of pericarps, seed coats, embryo and aleurone layer meal produced when brown rice is processed into polished rice. Lees prepared by squeezing oil from rice bran include phosphoric acid rich in phytin, and therefore, the fertilizer with these excellent nutrients is very effective to cultivate agricultural products of delicious taste with high nutrition value.

When the fertilizer is spread in soil, the chelate is not decomposed, however the fertilizer contains corn embryo and oil cake of rice bran which involve natural organic substances. Microorganisms in soil decompose these organic substances into inorganic substances which are absorbed as nourishment from roots of crops or plants. Accordingly, natural organic substances in the fertilizer promote to activate microorganisms in soil so that the microbes continuously and successively decompose organic substances to keep the fertile or productive effect or cultivating power of the fertilizer for a long period of time. As a result, the fertilizer can remarkably enhance growth of antiseptic, anti-moldy or fungicidal and safe agricultural products resistive to harmful insect, keeping natural ecosystem and good quantitative balance between nourishment and microorganisms in soil.

An amount of the metallic compound under 0.01 part will generate no chelate with the metal coordination, and an amount of the metallic compound over 5 parts cannot further upgrade the improved cultivating effect of the fertilizer with the increased amount of the metallic compound, and it must be required to prevent contamination of the soil by an excessive amount of the metallic compounds accumulated therein. The potassium element of 2 to 8 parts will be efficacious to synthesize carbohydrates and nitrogen compounds and to promote anabolism, growth of the roots, flowering and fruitage. The nitrogeous fertilizer of 2 to 8 parts will serve to promote synthesis of protein in plants, division and multiplication of cells, growth of the roots and sufficient upgrowth of the leaves and stems and to advance absorption and the anabolism of the nutrition. The alkali polyphosphate of 1 to 5 parts will serve to promote absorption of effective components by agricultural products and growth of roots to activate germination. An amount of the alkali polyphosphate under 1 part will generate no sufficient amount of the chelate and agricultural products will absorb no fertilizer in soil. If an amount of the alkali polyphosphate exceeds 5 parts, the fertilizer will not produce any better effect. Agricultural products will absorb little nutrition with corn embryo or oil cake of rice bran under 30 parts. An amount of the embryo or the bran exceeds 70 parts will cause no better fertile effect for farm products.

### BEST MODE FOR CARRYING OUT THE INVENTION

Detailed embodiments of the fertilizer and the crops cultivated thereby according to the present invention are described hereinafter.

The fertilizer according to the present invention comprises on the basis of weight 0.01 to 5 parts of a metallic compound, 2 to 8 parts of one or combination of potassic and nitrogenous elements, 1 to 5 parts of alkali polyphosphate, 30 to 70 parts of corn embryo or oil cake of rice bran wherein the metallic compound and alkali polyphosphate can form a chelate.

The metallic compound is one or more selected from groups of sulfate, chloride, nitrate, acetate, carbonate, silicate, borate, oxide and hydroxide. Metal of the metallic compound should be one or more selected from the groups of nickel (Ni), calcium (Ca), iron (Fe), zinc (Zn), copper (Cu), manganese (Mn), chromium (Cr), selenium (Se) and molybdenum (Mo). The particularly preferable metallic compound is a selenium compound because selenium is a component of glutathione peroxidase (GPx) which is an enzyme for reducing electrophile such as active oxygen into water or alcohol so that the selenium provides an active center incorporated in the peptide chain to be subjected to oxidation-reduction in substrate. Accordingly, when agricultural products are cultivated with the fertilizer including the selenium compounds, and people and animals ingest the agricultural products in their living body, the ingested selenium compounds will immediately derive glutathione peroxidase (GPx) to inhibit mutation, cell toxicity and carcinogenesis.

Polyphosphoric acid of a alkali polyphosphate is one or more selected from groups of pyrophosphoric acid (H₄P₂O₇), triphosphoric acid (H₅P₃O₁₀), trimeta-phosphoric acid (H₃P₃O₉) and tetrametaphosphoric acid (H₄P₄O₁₂) which can react with metal to easily form chemically stable chelates. After the fertilizer according to the present invention is applied in soil together with polyphosphoric acid, agricultural products absorb the natural chelate without further reacting with metals in soil to form metal composites. An alkali metal preferably includes sodium or potassium to form the alkali polyphosphate effective to increase solubility of metal polyphosphate metal in order to fully liquefy the fertilizer with chelate.

Preferable potassic element may include potassium chloride, potassium sulfate, Carnallite (KCl · MgCl₂ · 6H₂O), potash ores (containing KCl or K₂SO₄), bittern potassium salt (KCl (+ NaCl + MgSO₄)), plant and wood ashes (K₂CO₃ + KHCO₃), kelp ashes (KCₗ + K₂SO₄), cement dust (sulfate, carbonate and silicate) and blast furnace dust (carbonate and sulfate).

The preferable nitrogenous element may include ammoniacal nitrogen such as ammonium sulfate ((NH₄)₂SO₄), ammonium chloride (NH₄Cl), ammonium nitrate (NH₄NO₃), ammonium phosphate ((NH₄)₂HPO₄, NH₄H₂PO₄), aqua ammonia (NH₄OH), ammoniated peat (organic acid ammonium salt), ammoniated calcium superphosphate (NH₄H₂PO₄ + (NH₄)₂SO₄ and the like), ammonium sulfate nitrate ((NH₄)₂SO₄ + NH₄NO₃), Ammophos ((NH₄)₂SO₄ + (NH₄)₂HPO₄), ammonium sulfate phosphate ((NH₄)₂SO₄ + (NH₄)₂HPO₄), excrement (ammonium salt) and stable manure (ammonium salt); nitrate nitrogen such as ammonium nitrate (NH₄NO₃), Chile saltpeter (NaNO₃), nitrate of lime (Ca(NO₃)₂), potassium nitrate (KNO₃), ammonium sulfate nitrate ((NH₄)₂SO₄ + NH₄NO₃), nitrochalk (NH₄NO₃ + CaCO₃) and Calurea (Ca(NO₃)₂ · 4CO(NH₂)₂); cyanamide nitrogen such as lime nitrogen (CaCN₂); urea nitrogen such as urea (CO(NH₂)₂), and Calurea (Ca(NO₃)₂ · 4CO(NH₂)₂); amino nitrogen such as urea-formaldehyde (Uraform) (CO(NH₂)₂-HCHO condensate), oxamide (NH₂-CO-CO-NH₂), guanylurea salt ([NH₂-C(NH)-NH-CO-NH₂] · X, where X is HCl, H₂SO₄, HNO₃, H₃PO₃ and the like), guanidine salt ([NH₂-C(NH)-NH₂] · X, where X is HCl, H₂SO₄, HNO₃, H₃P_{O3} and the like) and ammoniated peat (containing CO(NH₂)₂); and protein nitrogen such as fish manure (containing NH₂, NH) and soybean cake (containing NH₂, NH).

The fertilizer according to the present invention contains inexpensive corn embryo or oil cake of rice bran which contains nutritive substances such as protein, fats, minerals, vitamins and carbohydrates with the good composite balance to cultivate agricultural products, for example vegetables and mushrooms of the good color, excellent aroma, delicious taste and high nutrition by absorption of the corn embryo or bran.

When a living body ingests the agricultural product cultivated with the fertilizer according to the present invention, the chelate can generate in the living body enzymes for detoxifying active oxygen hydrogen peroxide, organic peroxides, and carcinogenic substances with a resistance to oxidation, resulting in derivation of glutathione S-transferase (GST) molecular species in kidney and liver, and glutathione peroxidase (GPx) in kidney.

For example, the fertilizer according to the present invention may comprise 0.01 to 5 parts of a selenium trioxide as a metallic compound, 2 to 8 parts of a potassic element, 1 to 5 parts of a sodium pyrophosphate as a alkali polyphosphate, 30 to 70 parts of corn embryo powder. Also, the fertilizer according to the present invention comprises 0.01 to 5 parts of a copper sulfate as a metallic compound, 2 to 8 parts of a nitorogenous element, 1 to 5 parts of a sodium pyrophosphate as a alkali polyphosphate, 30 to 70 parts of oil cake of rice bran.

The agricultural products such as vegetables, mushrooms cultivated with the fertilizer are harvested, and then freeze-dried, powdered and formed into tablets or capsules for easy ingestion into living bodies.

### Example 1

Selenium trioxide of 0.07 part by weight as a metallic compound was dissolved in water of 3 parts to generate a water solution. Then, sodium pyrophosphate (Na₄P₂O₄) of 2 parts by weight as a alkali polyphosphate was added to the water solution which was then agitated for 60 minutes. In this case, agitation of the water solution for approximately 30 minutes or longer would provide the water solution with goof homogenization without substantial problem, however, it would be desirable to agitate the water solution for 60 minutes or longer to thoroughly temper and homogenize the chelate compounds. Subsequently, corn embryo powder of 42 parts and plant and wood ashes (K₂CO₃, KHCO₃) of 4 parts as a potassic element were added to the water solution which was agitated for 60 minutes to generate the fertilizer.

### Example 2

Copper sulfate (CuSO₄) of 0.05 part by weight as a metallic compound was dissolved in water of 5 parts to generate a water solution. Then, sodium triphosphate (Na₃(P₂O₄)₃) of 1 part by weight as a alkali polyphosphate was added to the water solution which was then agitated for 60 minutes. In this case, agitation for approximately 30 minutes or longer would provide the homogenized water solution, although it would be desirable to agitate it for 60 minutes or longer to thoroughly temper and homogenize the chelate. Subsequently, 55 parts of oil meal of rice bran and 3 parts of ammonium sulfate ((NH₄)₂SO₄) as a nitorogenous element were added to the water solution which was agitated for 60 minutes to generate the fertilizer with chelate.

Each fertilizer of Examples 1 and 2 was diluted with water to one tenth concentration, and 200 cc of the diluted fertilizer was spread around stocks of onion and maitake (a kind of Japanese mushrooms) twice a week for two weeks. Two kinds of onion and maitake cultivated with and without the fertilizer were given for three weeks to F344 female rats of 7-weeks old whose liver and kidney were extracted. Then, comparison was made on color, aroma and taste of the products, amount of the enzymes contained in the internal organs of the rats, antiseptic and fungus resistant properties, detoxifying effect on carcinogenic substances and the like, and a resistance to oxidation regarding the enzymes in the following methods 1 to 3:
(1) Examining color, aroma and taste of the onion and maitake in the normal state and in the fried condition in high temperature oil.
(2) Examining the antiseptic and fungus resistant properties of the onion and maitake chopped into small pieces, placed in water, and left at room temperature.
(3) Measuring the amount of glutathione S-transferase (GST) molecular species and glutathione peroxidase (GPx) as enzymes. Each amount of the GST molecular species was determined as follows:

### (i) Preparation of samples for electrophoresis

Added to the extracted liver and kindney of the rats was 0.25 M sucrose-10 mM phosphate buffer solution of pH 7.4 in the amount three times of the weight of each piece for homogenization. 20% SDS of 50 microliters and PBS of 275 microliters were added to the homogenized pieces of 20 microliters, and the mixture was diluted with water into one tenth concentration to determine the total amount of protein by the Lowry method. A diluent was added to the samples to adjust the protein concentration of the mixture to 1 mg/ml, and after boiling the mixture for 2 minutes with heated water, 0.1% BPB of 50 microliters was added to the mixture to adjust electrophoresis samples.

### (ii) Electrophoresis

Electrophoresis was performed to separate the protein of the electrophoresis samples with 12.5% SDS-polyacrylamide gel (electrophoresis SDS-PAGE) until the protein migrated and passed stack gel at 28 mA, and migrated through separate gel at 36 mA for an hour.

### (iii) Imprinting (Western Blot)

### Electric current was supplied to nitrocellulose membranes from a TRANS-BLOT CELL manufactured by BIO RAD under 80 Volts for two hours to imprint on the membranes the protein separated by the electrophoresis.

### (iv) Immunostaining

### (a) Blocking treatment

Nitrocellulose membranes were subjected to blocking treatment for an hour in a 3% skimmed milk TBS buffer solution of pH 7.4.

### (b) Primary antibody

A TBS buffer solution containing 3% bovine albumin (BSA) was added to rabbit polyclonal antibody manufactured by Biotrin International Limited which corresponds to any of the rGST A1 (Ya), rGST A3 (Yc), rGST A4 (Yk), rGST M1 (Yb1), rGST M2 (Yb2), and rGST P1 (Yp) for dilution into one thousands concentration. After left overnight in cold room or for an hour at room temperature, the dilution was washed for 5 minutes with the TBS buffer solution, two times for 5 minutes with the TBS buffer solution containing 0.05% Tween 20, and further for 5 minutes with the TBS buffer solution.

### (c) Secondary antibody

The anti-rabbit IgG goat antibody with a label of alkaline phosphatase manufactured by Jacson Immuno Research Laboratories, Inc. was diluted 1/5000 with the TBS buffer solution of pH 7.4, and after necessary reactions in the solution for an hour at room temperature, the dilution was washed similarly to the primary antibody.

### (d) Color development

Coloring reaction was made with a coloring reagent named "Nitro Blue Tetra" manufactured by Pierce Corporation.

### (v) Analysis

The developed color band of each sample was read into the Adobe Photo Shop of the photo retouching software to measure an intensity of the developed color band with NIH image analyzer. The resultant data were compared to examine derivation of the GST molecular species based on the significant difference assay (the t minus assay). The measurements for the GST molecular species were calculated in the form of intensity ratios (without dimension) assuming the intensity "1" of the developed color band regarding the liver and kidney of F344 female rats of 7 weeks old to which commercially available regular solid feedstuff was given for 3 weeks instead of the onion and maitake.

**Table**

| | | | | | |
|---|---|---|---|---|---|
| Effect | | Sample 1 | Blank 1 | Sample 2 | Blank 2 |
| Color | | Fresh and deep | Normal | Fresh and deep | Normal |
| Aroma | | Strong | Normal | Strong | Normal |
| Taste | | Rich | Normal | Rich | Normal |
| Anti-septic and fungus resistant properties | | Fungi occur in 8 days. | Fungi occur in 2 days. | Fungi occur in 7 days. | Fungi occur in 3 days. |
| GST | Kidney | 273±27* | 122±21* | 257±19* | 121±20 |
| | Liver | 18061±153* | 903±60* | 1739±164* | 906±62 |
| GPx | Kidney | 271±22* | 222±27* | 293±17* | 224±25 |

### Test Results

Table 1 shows the test results of the enzymes, GST (nmol/mg protein/min) and GPx (mU/mg protein/min), and the marks (*) indicate significant differences of Samples 1 and 2 according to the present invention, as compared to Blanks 1 and 2 without the fertilizer according to the present invention. The unit "nmol/mg protein/min" shows amounts of enzymes with nano mol [nmol=U(unit)] derived in 1 milligram of protein for 1 minute. The unit "mU(milli Unit)" means pico mol [mU=pmol]. In Table, Samples 1 and 2 obviously indicate advantageous results on good color, excellent aroma and delicious taste of the products as well as the longer antiseptic and fungus resistant properties, compared to Blanks 1 and 2. Also, Samples 1 and 2 indicate larger amounts of formed enzymes glutathione S-transferase molecular (GST) species generated in the kidney and liver, compared to Blanks 1 and 2. GST has a detoxifying effect on carcinogenic substances and the like, and a resistance to oxidation. Samples 1 and 2 indicate larger amounts of enzymes, glutathione peroxidase (GPx) generated in the kidney and liver, compared to Blanks 1 and 2.

As a result, it has been found that the fertilizer according to the present invention can cultivate the agricultural products which keep the fresh state for a long period of time because the products have antiseptic and fungus resistant properties, and therefore quality of the products is not deteriorated during transportation to a remote place. When people eat and ingest the products, the chelate in their bodies can generate enzymes having a detoxifying effect on carcinogenic substances and the like, anticancer effect, and a resistance to oxidation in the living body to improve human health.

## Claims

1. A fertilizer comprising on the basis of weight 0.01 to 5 parts of a metallic compound, 2 to 8 parts of one or combination of potassic and nitrogenous elements, 1 to 5 parts of alkali polyphosphate, and 30 to 70 parts of corn embryo or oil cake of rice bran, wherein said metallic compound and alkali polyphosphate can form a chelate.

2. A fertilizer according to claim 1, wherein polyphosphoric acid of said alkali polyphosphate is one or more selected from the groups of pyrophosphoric, triphosphoric, trimetaphosphoric and tetrametaphosphoric acids.

3. A fertilizer according to claim 1, wherein said metallic compound is one or more selected from the groups of sulfate, chloride, nitrate, acetate, carbonate, silicate, borate oxide and hydroxide.

4. A fertilizer according to claim 1, wherein a metal of said metallic compound is one or more selected from the groups of nickel (Ni), calcium (Ca), iron (Fe), zinc (Zn), copper (Cu), manganese (Mn), chromium (Cr), selenium (Se) and molybdenum (Mo).

5. A fertilizer according to claim 1, comprising 0.01 to 5 parts of a selenium trioxide as a metallic compound, 2 to 8 parts of a potassic element, 1 to 5 parts of a sodium pyrophosphate as a alkali polyphosphate, 30 to 70 parts of corn embryo powder.

6. A fertilizer according to claim 1, comprising 0.01 to 5 parts of a copper sulfate as a metallic compound, 2 to 8 parts of a nitorogenous element, 1 to 5 parts of a sodium pyrophosphate as a alkali polyphosphate, and 30 to 70 parts of oil cake of rice bran.

7. A fertilizer according to claim 1, wherein a metal of said metallic compound forms a central metal of said chelate.

8. A fertilizer according to claim 1, wherein said alkali polyphosphate and metallic compound generate chelate rings of the metal coordination after the mixture of the fertilizer ingredients or in soil.

9. Crops cultivated with a fertilizer which comprises on the basis of weight 0.01 to 5 parts of a metallic compound for forming a central metal of a chelate, 2 to 8 parts of one or combination of potassic and nitrogenous elements, 1 to 5 parts of alkali polyphosphate, and 30 to 70 parts of corn embryo or oil cake of rice bran.

10. Crops according to claim 9, wherein said crops are vegetables or mushrooms.
